# EUROPEAN PATENT SPECIFICATION

(11) **EP 1 339 760 B1**
(45) Date of publication and mention of the grant of the patent: **16.08.2006**
(21) Application number: 01983848.1
(22) Date of filing: 09.11.2001
(51) Int. Cl.: C08F 4/649, C08F 10/00

(54) **METHOD FOR PRODUCING HOMO- AND CO-POLYMERS OF ETHYLENE**
VERFAHREN ZUR HERSTELLUNG VON HOMO- UND COPOLYMEREN VON ETHYLEN
PROCEDE DE PRODUCTION D'HOMOPOLYMERES ET DE COPOLYMERES D'ETHYLENE

(30) Priority: 09.11.2000 KR 2000066413
(43) Date of publication of application: 03.09.2003
(73) Proprietor: Samsung General Chemicals Co., Ltd., Seosan-shi, Chungcheongnam Province 356-870 (KR)
(72) Inventor: YANG, Chun-Byung, Taejeon-shi 305-390 (KR); KIM, Sang-Yull, Seosan-si, Chungcheongnam-do, 356-010 (KR); LEE, Yong-Bok, Seosan-si, Chungcheongnam-do, 356-873 (KR); LEE, Weon, Taejon 305-390 (KR)
(74) Representative: Zinnecker, Armin
(86) International application number: PCT/KR2001/001906
(87) International publication number: WO 2002/038623

(56) References cited:
- EP-A- 0 729 985
- WO-A-00/73356
- JP-A- 61 055 103
- JP-A- 61 268 704
- JP-A- 63 308 003
- KR-A- 94 026 081
- KR-A- 99 010 007
- US-A- 5 229 477
- US-A- 5 294 581

## Description

### Technical Field

The present invention provides a method for producing homo- and co-polymers of ethylene, or more particularly a method for producing homo- and co-polymers of ethylene by means of using a catalyst of high activity to produce said polymers of high bulk density and narrow molecular weight distribution.

### Background of the Invention

Catalysts containing magnesium for polymerization or co-polymerization of ethylene are known to have very high catalytic activities and to accord polymers of high bulk density, which are suitable for liquid phase or gas phase polymerization. By liquid phase polymerization of ethylene, it denotes a polymerization process performed in a medium such as bulk ethylene, isopentane, or hexane, and as for the important characteristics of catalysts used in this process, there are as follows: high catalytic activity, bulk density of the resultant polymers, etc. In conjunction with these characteristics, the molecular weight distribution is an important variable, which determines the physical property of ethylene polymers. In particular, the narrow molecular weight distribution of ethylene polymers is a very important and advantageous characteristic with respect to injection processed goods.

Many of the titanium-based catalysts containing magnesium for olefin polymerization, and the manufacturing methods thereof have been reported. Especially, many processes making use of magnesium solutions to obtain catalysts which can generate olefin polymers of high bulk apparent density have been known. There is a means of obtaining a magnesium solution by reacting magnesium compounds with such electron donors as alcohol, amine, cyclic ether, or organic carboxylic acid in the presence of a hydrocarbon solvent. As for the cases of use of alcohol, they are disclosed in US Patent Nos. 4,330,649 and 5,106,807. Further, the methods for production of catalysts containing magnesium by reacting said liquid-phase magnesium solution with a halogenated compound such as titanium tetrachloride are well known. Moreover, there have been attempts to control polymerization activity or molecular weight distribution by adding ester compounds. Such catalysts provide high bulk density to the resultant polymers, but there is much yet to be improved with respect to their catalytic activities or molecular weight distribution of polymers. Moreover, tetrahydrofuran, a cyclic ester, has been used as a solvent for a magnesium compound in US Patent Nos. 4,477,639 and 4,518,706.

Meanwhile, US Patent Nos. 4,847,227, 4,816,433, 4,829,037, 4,970,186, and 5,130,284 have reported the use of such electron donors as dialkylphthalate, phthaloyl chloride, etc. in reaction with the titanium chloride compound for the production of olefin polymerisation catalysts of superior polymerization activity, which are capable of enhancing the bulk density of resultant polymers.

US Patent No. 5,459,116 has reported a method of production of a titanium solid catalyst by contact-reacting a magnesium solution containing an ester having at least one hydroxyl group as an electron donor with a titanium compound. By this method, it is possible to obtain a catalyst of high polymerization activity, which accords high bulk density to resultant polymers, but there is room for yet more improvements.

During polymerization of α-olefin, particularly, during polymerization of propylene, the external electron donors are generally used for increasing catalytic activity and stereo-regularity. As for external electron donors, they include organic compounds respectively containing oxygen, silicon, nitrogen, sulfur, and phosphorus atoms, such as organic acid, organic anhydride, organic acid ester, alcohol, ether, aldehyde, ketone, silane, amine, aminoxide, amide, diol, and phosphate ester.

### Summary of the Invention

The objective of the present invention is to provide a method for producing homo- and co-polymers of ethylene by means of catalysts of superior catalytic activity, wherein said polymers have high bulk density and narrow molecular weight distribution. More particularly, the present invention provides a method for producing homo- and co-polymers of ethylene, having narrow molecular weight distribution of polymers, which involves controlling the particle shapes of polymers and using catalysts of high polymerization activity.

Still other objectives and the utility of the present invention will become apparent as references are made with respect to the following descriptions and the claims thereto.

### Detailed Description of the Preferred Embodiments

The method for producing homo- and co-polymers of ethylene according to the present invention comprises carrying out homo- or co-polymerization of ethylene in the presence of the following: (a) a solid complex titanium catalyst produced by a simple yet efficient manufacturing process, by using magnesium, titanium, halogen and electron donors, which comprises (i) preparing a magnesium solution by contact-reacting a halogenated magnesium compound with alcohol; (ii) reacting said solution with an ester compound containing at least one hydroxyl group and a silicone compound containing at least one alkoxy group; and (iii) adding a mixture of a titanium compound and a silicon compound; (b) organometallic compounds of Groups II or III of the Periodic Table; and (c) a cyclic nitrogen compound

For producing catalysts used in the present invention, the types of halogenated magnesium compounds used therein are as follows: di-halogenated magnesiums such as magnesium chloride, magnesium iodide, magnesium fluoride, and magnesium bromide; alkymagnesium halides such as methylmagnesium halide, ethylmagnesium halide, propylmagnesium halide, butylmagnesium halide, isobutylmagnesium halide, hexylmagnesium halide, and amylmagnesium halide; alkoxymagnesium halides such as methoxymagnesium halide, ethoxymagensium halide, isopropoxymagnesium halide, butoxymagnesium halide, octoxymagnesium halide; and aryloxymagnesium halides such as phenoxymagnesium halide and methyl-phenoxymagnesium halide. Of the above magnesium compounds, two or more compounds can be used in a mixture. Further, the above magnesium compounds can be effectively used in the form of a complex compound with other metals.

Of the compounds listed above, some can be represented by a simple formula, but the others cannot be so represented depending on the production methods of magnesium compounds. In the latter cases, it can be generally regarded as a mixture of some of the listed compounds. For example, the following compounds can be used in the present invention: such compounds obtained by reacting magnesium compounds with polysilolxane compounds, silane compounds containing halogen, ester, or alcohol; and such compounds obtained by reacting magnesium metals with alcohol, phenol, or ether in the presence of halosilane, phosphorus pentachloride, or thionyl chloride. However, the preferable magnesium compounds are magnesium halides, especially magnesium chloride or alkylmagnesium chloride, preferably those having respectively an alkyl group of 1~ 10 carbons; alkoxymagnesium chlorides, preferably those having respectively 1 ~ 10 carbons; and aryloxymagnesium chlorides, preferably those having respectively 6 ~ 20 carbons. The magnesium solution used in the present invention can be produced as solution by using the aforementioned magnesium compounds in the presence a hydrocarbon solvent or in the absence thereof, in an alcohol solvent

As to the types of hydrocarbon solvents used in the present invention, they include aliphatic hydrocarbons such as pentane, hexane, heptane, octane, decane, and kerosene; alicyclic hydrocarbons such as cyclobenzene, methylcyclobenzene, cyclohexane, and methylcyclohexane; aromatic hydrocarbons such as benzene, toluene, xylene, ethylbenzene, cumene, and cymene; and halogenated hydrocarbons such as dichloropropane, dichloroethylene, trichloroethylene, carbon tetrachloride, and chlorobenzene.

When a halogenated magnesium compound is converted into a magnesium solution, alcohol is used in the presence of the aforementioned hydrocarbons or in the absence of thereof. The types of alcohol include those containing 1 ~ 20 carbon atoms, such as methanol, ethanol, propanol, butanol, pentanol, hexanol, octanol, decanol, dodecanol, octadecyl alcohol, benzyl alcohol, phenylethyl alcohol, isopropyl benzyl alcohol, and cumyl-alcohol, although alcohol containing 1~12 carbon atoms is preferable. The average size of a target catalyst and its particle distribution can vary according to the types of alcohol, the total contents, the types of magnesium compounds, and the ratio of magnesium to alcohol, etc. Nevertheless, the total amount of alcohol required to obtain the magnesium solution is at least 0.5 mol per each mole of magnesium compounds, preferably about 1.0~20 mol, or more preferably about 2.0~10 mol.

During the production of magnesium solution, the reaction of a halogenated magnesium compound with alcohol is preferably carried out in the presence of a hydrocarbon medium. The reaction temperature, while variable depending on the types and the amount of alcohol, is at least about -25°C, preferably -10 ~ 200°C, or more preferably about 0 ~ 150°C. It is preferable to carry out the reaction for about 15 minutes ~ 5 hours, preferably for about 30 minutes ~ 4 hours.

Of the electron donors used in the production of catalysts used in the present invention, the ester compounds respectively containing at least one hydroxyl group include unsaturated aliphatic acid esters respectively having at least one hydroxyl group, such as 2-hydroxy ethylacrylate, 2-hydroxy ethylmethacrylate, 2-hydroxypropyl acrylate, 2-hydroxypropylmethacrylate, 4-hydroxy butylacrylate, pentaerythritol triacrylate; aliphatic monoesters or polyesters respectively containing at least one hydroxyl group, such as 2-hydroxy ethyl acetate, methyl 3-hydroxy butylate, ethyl 3-hydroxy butylate, methyl 2-hydroxy isobutylate, ethyl 2-hydroxy isobutylate, methyl-3-hydroxy-2-methyl propionate, 2,2-dimethyl-3-hydroxy propionate, ethyl-6-hydroxy hexanoate, t-butyl-2-hydroxy isobutylate, diethyl-3-hydroxy glutarate; ethyl lactate, isopropyl lactate, butyl isobutyl lactate, isobutyl lactate, ethyl mandelate, dimethyl ethyl tartrate, ethyl tartrate, dibutyl tartrate, diethyl citrate, triethyl citrate, ethyl-2-hydroxy-caproate, diethyl *bis*-(hydroxy methyl) malonate; aromatic esters respectively having at least one hydroxyl group, such as 2-hydroxy ethyl benzoate, 2-hydroxy ethyl salicylate, methyl-4-(hydroxy methyl) benzoate, methyl 4-hydroxy benzoate, ethyl 3-hydroxy benzoate, 4-methyl salicylate, ethyl salicylate, phenyl salicylate, propyl 4-hydroxy benzoate, phenyl 3-hydroxy naphthanoate, monoethylene glycol monobenzoate, diethylene glycol monobenzoate, triethylene glycol monobenzoate; alicyclic esters respectively having at least one hydroxyl group, such as hydroxybutyl lactone, and others. The amount of the ester compound containing at least one hydroxyl group should be 0.001 ~ 5 mol per mole of magnesium, or preferably 0.01 ~ 2 mol per mole of magnesium.

For the silicon compound containing at least one alkoxy group, which can be used as another electron donor while producing catalysts used in the present invention, a compound which is represented by a general formula of RₙSi(OR)₄₋ₙ (here R is a hydrocarbon having 1~12 carbons, while "n" is an integer from 0 to 3) is preferable. In particular, the following compounds can be used: dimethyldimethoxysilane, dimethyldiethoxysilane, diphenyldimethoxysilane, methylphenylmethoxysilane, diphenyldiethoxysilane, ethyltrimethoxysilane, vinyltrimethoxysilane, methyltrimethoxysilane, phenyltrimethoxysilane, methyltriethoxysilane, ethyltriethoxysilane, vinyltriethoxysilane, butyltriethoxysilane, phenyltriethoxysilane, ethyltriisopropoxysilane, vinyltributoxysilane, ethylsilicate, butylsilicate, methyltriaryloxysilane, etc. The amount of said compound is preferably 0.05~3mol per mole of magnesium, or more preferably 0.1~2mol.

As for the temperature for the contact-reaction of the magnesium solution, an ester compound containing at least one hydroxyl group, and an alkoxy silicone compound, the temperature of 0 ~ 100°C is appropriate, or more preferably 10 - 70°C.

For recrystalization of catalyst particles, the magnesium compound solution reacted with the electron donor is then reacted with a mixture of a liquid titanium compound represented by a general formula of Ti(OR)ₐX₄₋ₐ (here R is a hydrocarbon group, X a halogen atom, "a" a natural number from 0 to 4) and a compound represented by a general formula of RₙSiCl₄₋ₙ (here R is hydrogen, an alkyl group, an alkoxy, haloalkyl, or aryl group having 1-10 carbons, or halosilyl, or a halosilylalkyl group having 1-8 carbons, and "n" a natural number from 0 to 3).

The types of titanium compounds which satisfy the general formula of Ti(OR)ₐX₄₋ₐ include 4-halogenated titanium such as TiCl₄, TiBr₄, and TiI₄; 3-halogenated alkoxy-titanium such as Ti(OCH₃)Cl₃, Ti(OC₂H₅)Cl₃, Ti(OC₂H₅)Br₃, and Ti(O(i-C₄H₉))Br₃; 2-halogenated alkoxy titanium compounds such as Ti(OCH₃)₂Cl₂, Ti(OC₂H₅)₂Cl₂, Ti(O(i-C₄H₉))₂Cl₂, and Ti(OC₂H₅)₂Br₂; and tetra-alkoxy titanium such as Ti(OCH₃)₄, Ti(OC₂H₅)₄, and Ti(OC₄H₉)₄. A mixture of the above titanium compounds can also be used in the present invention. However, the preferable titanium compounds are those containing respectively halogen, or more preferably titanium tetrachloride.

The types of silicon compounds satisfying the above general formula of RₙSiCl₄₋ₙ (here R is hydrogen, an alkyl group, an alkoxy, haloalkyl, or aryl group having 1-10 carbons, or halosilyl, or a halosilylalkyl group having 1-8 carbons, and "n" a natural number from 0 to 3) include silicon tetrachloride; trichlorosilanes such as methyltrichlorosilane, ethyltdchlorosilane, phenyltrichlorosilane; dichlorosilanes such as dimethyldichlorosilane, diethyldichlorosilane, diphenyldichlorosilane, and methylphenyldichlorosilane; monochlorosilanes such as trimethylchlorosilane; and a mixture of these silicon compounds can also be used in the present invention, or more preferably silicon tetrachloride can be used.

The amount of mixture of a titanium compound and a silicon compound used during recrystallization of magnesium compound solution is appropriately 0.1 ~ 200 mol per mole of magnesium compounds, preferably 0.1 ~ 100 mol, or more preferably 0.2 ~ 80 mol. The molar ratio of the silicon compound to the titanium compound in mixture is appropriately 0.05 ~ 0.95, or more preferably 0.1 ~ 0.8. When the magnesium compound solution is reacted with the mixture of a titanium compound and a silicon compound, the shapes and the sizes of the resultant re-crystallized solid constituents vary a great deal according to the reaction conditions. Hence, the reaction of the magnesium compound solution with the mixture of a titanium compound and a silicon compound should be carried out preferably at a sufficiently low temperature to result in formation of solid constituents. More preferably, the reaction should be carried out by contact reaction at -70~70°C, or most preferably at -50~50°C. After the contact-reaction, the reacting temperature is slowly raised for sufficient reaction for the duration of 0.5 ~ 5 hours at 50 ~ 150°C.

The particles of said solid catalysts obtained during the above process can be further reacted with the titanium compounds. These titanium compounds are titanium halides or halogenated alkoxy titaniums respectively with an alkoxy functional group of 1 ~ 20 carbons. At times, a mixture of these compounds can also be used. Of these compounds, however, a titanium halide or a halogenated alkoxy titanium compound having an alkoxy functional group of 1~8 carbons can be appropriately used, or more preferably a titanium tetrahalide can be used.

The catalyst produced according to the process of the present invention can be utilized for homo- or co-polymerization of ethylene. In particular, the catalyst is used in homopolymerization of ethylene, and also in co-polymerization of ethylene and α-olefin such as propylene, 1-butene, 1-pentene, 4-methyl-1-pentene, or 1-hexene having three or more carbons.

The polymerization reaction according to the present invention involves producing homo- and co-polymers of ethylene in the presence of the following. (a) a solid complex titanium catalyst abovementioned comprising magnesium, titanium, halogen, and an electron donor; (b) organometallic compounds of Groups II or III of the Periodic Table; and (c) a cyclic nitrogen compound.

The solid titanium catalyst component can be used as a component in the polymerization reaction after pre-polymerization with ethylene or α-olefin. The pre-polymerization can be carried out in the presence of a hydrocarbon solvent such as hexane, at a sufficiently low temperature, with ethylene or α -olefin under pressure, in the presence of the above catalyst constituent and such organic aluminium compound as triethylaluminium. The pre-polymerization, by maintaining the shapes of catalysts by surrounding the catalyst particles with polymers, is helpful in producing good-quality post-polymerization shapes of polymers. The weight ratio of polymers to catalysts after pre-polymerization is ordinarily 0.1:1~ 20:1.

The organometallic compound in the present invention can be represented by a general formula of MRₙ, wherein, M stands for a metal constituent of Group II or IIIA in the Periodic Table, such as magnesium, calcium, zinc, boron, aluminium, and gallium, R for an alkyl group with 1~20 carbons, such as a methyl, ethyl, butyl, hexyl, octyl, or decyl group, and n for the atomic valence of the metal constituent. As for more preferable organometallic compounds, a trialkyl aluminium having an alkyl group of 1 - 6 carbons, such as triethylaluminium and triisobutylaluminium, or the mixture thereof can be utilized. On occasion, an organic aluminium compound having one or more halogen or hydride groups, such as ethylaluminium dichloride, diethylaluminium chloride, ethylaluminium *sesqui*chloride, or diisobutylaluminium hydride can also be used.

The external electron donor used for production of ethylene polymers having narrow molecular weight distribution with high catalytic activity according to the present invention is a cyclic nitrogen compound The types of cyclic nitrogen compounds include 2,6-lutidine, 2,3-dimethylquinoxaline, quinaldine, 2,4,6-collidine, 2,4-dimethylquinoline, 2-picoline, 2;3,5,6-tetramethylpyrazine, phenazine, acridine, di-t-butylpyridine, and the mixture thereof.

As for the polymerization reaction, it is possible to carry out either the gas phase or bulk polymerization in the absence of an organic solvent, or the liquid slurry polymerization in the presence of an organic solvent. These polymerization methods, however, are carried out in the absence of oxygen, water, or other compounds that may act as catalytic poison.

The concentration of the solid complex titanium catalyst (a) with respect to the polymerization reaction system, in case of liquid phase slurry polymerization, is approximately 0.001 - 5 mmol in terms of titanium atoms in catalyst per one liter of the solvent, or more preferably approximately 0.001 ~ 0.5 mmol. As for the solvent, the following compounds or the mixtures thereof can be used: alkanes such as pentane, hexane, heptane, n-octane, isooctane, cyclohexane, methylcyclohexane; alkylaromatics such as toluene, xylene, ethylbenzene, isopropylbenzene, ethyltoluene, n-propylbenzene, diethylbenzene; halogenated aromatics such as chlorobenzene, chloronaphthalene, ortho-dichlorobenzene; and the mixtures thereof.

In the case of gas phase polymerization, the amount of the solid complex titanium catalyst (a) should be approximately 0.001 ~ 5 mmol in terms of titanium atoms in catalyst per one liter of the polymerization reactor, preferably approximately 0.001 ~ 1.0 mmol, or more preferably approximately 0.01~0.5 mmol.

The preferable concentration of the organometallic compound (b), as calculated, by organometallic atom, is about 1 ~ 2,000 mol per mole of titanium atoms in catalyst (a), or more preferably about 5 ~ 500 mol.

The preferable concentration of said cyclic nitrogen compound (c) is approximately 0.001~40mol per mole of organometallic atoms in the organometallic compound (b), or more preferably approximately 0.05~30mol.

To secure a high reaction rate of polymerization, the polymerization herein is carried out at a sufficiently high temperature, regardless of the polymerization process. Generally, the temperature of approximately 20 ~ 200° C is appropriate, or more preferably approximately 20 ~ 95 °C. The appropriate pressure of monomers at the time of polymerization is the atmospheric to 100 atm, or more preferably 2 ~ 50 atm.

The molecular weights of the polymers in the present invention are shown in melt index (ASTM D 1238), which is generally known in the art. The value of the melt index generally becomes greater as the molecular weight decreases. Moreover, the molecular weight distributions of polymers were measured with gel permeation chromatography (GPC), the method of which is generally known in the art.

The products obtained by the method of polymerization of the present invention are solid ethylene homo-polymers or the copolymers of ethylene and α -olefin, which have excellent bulk density and fluidity. Since the yields of polymer are sufficiently high, there is no need for the removal of catalyst residues.

### EXAMPLES AND COMPARATIVE EXAMPLES

The present invention is further described by means of the examples and comparative examples as below but should not be confined or limited to these examples.

### EXAMPLE 1

### Production of catalyst

A solid complex titanium catalyst was produced by means of the following three steps:
(i) Step: Production of magnesium compound solution
   Into a 1.0L reactor equipped with a mechanical stirrer, replaced with nitrogen atmosphere, 9.5 g of MgCl₂ and 600 ml of decane were placed therein. After stirring at 500 rpm, 70 ml of 2-ethyl hexanol was added thereto. The temperature was raised to 120°C, and then the reaction was allowed to continue for three hours. The homogenous solution, which was obtained after the reaction, was cooled to room temperature (25 ° C).
(ii) Step : Contact-reaction of magnesium solution with ester containing a hydroxyl group and alkoxy silane compound
   To the magnesium compound solution, cooled to 25°C, 0.8ml of 2-hydroxyethyl methacrylate and 15.0ml of silicon tetraethoxide were added, and then the reaction was allowed to continue for an hour.
(iii) Step : Treating with mixture of titanium compound and silicon compound
   After adjusting the temperature of said solution to room temperature (25°C), a solution mixture of 50 ml of titanium tetrachloride and 50 ml of silicon tetrachloride was dripped thereto for one hour. After completing the dripping process, the temperature of the reactor was raised to 70°C and maintained at that temperature for one hour. After stirring, after cooling it to room temperature, the supematant of the solution was removed, and the remaining solid layer was continuously instilled with 300 ml of decane and 100 ml of titanium tetrachloride. There, the temperature was raised to 100°C and maintained thereat for two hours. After the reaction, after cooling it to room temperature, it was washed with 400ml of hexane until the removal of free unreacted TiCl₄. The titanium content of the solid catalyst so produced was 4.9 %.

### Polymerization

A 2-L high-pressure reactor was dried in an oven and assembled while hot In order to make the inside of the reactor nitrogen atmosphere, nitrogen and vacuum were alternatively manipulated three times in the reactor. It was then instilled with 1,000 ml of n-hexane, after which 3mmol of triethylaluminium, 0.05mmol of 1,2-lutidine, and the above solid catalyst by 0.03 mmol in terms of titanium atoms were added thereto. Then, 1,000 ml of hydrogen was added. The temperature of the reactor was raised to 80°C while stirring at 700 rpm with a stirrer. The pressure of ethylene was adjusted to 80psi, and the polymerization was allowed to continue for an hour. After the polymerization, the temperature of the reactor was lowered to room temperature, and an excessive amount of ethanol solution was added to the polymerized matters. The polymer thus produced was collected by separation and was dried in a vacuum oven at 50°C for at least six hours, whereby polyethylene was obtained in the form of white powder.

The polymerization activity (kg of polyethylene divided by gram of catalyst) was calculated as a weight (kg) ratio of the polymers as produced per the amount of catalysts so used (gram of catalyst). The results of polymerization are shown in Table 1, together with the bulk density (g/ ml) of the polymers, the melt index (g/10 minutes), and the molecular weight distribution (Mw/Mn).

### EXAMPLES 2 ~ 10

While changing the types and concentrations of cyclic nitrogen compounds, the polymerization was respectively carried out in the same manner as in Example 1 with the catalyst produced in Example 1, and the results thereof are shown in Table 1.

### COMPARATIVE EXAWLE 1

With the catalyst produced in Example 1, the polymerization was carried out in the same manner as in Example 1, but without using 1,2-lutidine during the polymerization process of Example 1, and the results thereof are shown in Table 1.

### COMPARATIVE EXAMPLE 2

The catalyst was produced in the same manner as in Example 1, but without using 2-hydroxyethylmethacrylate and silicone tetraethoxide in Step (ii) during the process of catalyst production of Example 1. The titanium content of the catalyst so produced was 4.9 %. The polymerization was carried out in the same manner as in Comparative Example 1, and the results thereof are shown in Table 1.

### COMPARATIVE EXAMPLE 3

The catalyst was produced in the same manner as in Example 1, except for using 15.0ml of silicon tetraethoxide but without 2-hydroxyethylmethacrylate in Step (ii) during the process of catalyst production of Example 1. The titanium content of the catalyst so produced was 4.7 %. The polymerization was carried out in the same manner as in Comparative Example 1, and the results thereof are shown in Table 1.

### COMPARATIVE EXAMPLE 4

The catalyst was produced in the same manner as in Example 1, except for using 0.8ml of 2-hydroxyethylmethacrylate but without silicon tetraethoxide in Step (ii) during the process of catalyst production of Example 1. The titanium content of the catalyst so produced was 4.1 %. The polymerization was carried out in the same manner as in Comparative Example 1, and the results thereof are shown in Table 1.

**Table 1**

| Example | Cyclic nitrogen compound | | Activity (kgPE/ g of catalyst) | Melt Index (g/10min) | Bulk Density (g/ml) | Molecular Weight Distribution (Mw/Mn) |
|---|---|---|---|---|---|---|
| | Compound | Amount (mmol) | | | | |
| 1 | 2,6-lutidine | 0.05 | 5.0 | 1.6 | 0.36 | 5.2 |
| 2 | 2,4,6-collidine | 0.05 | 5.1 | 1.4 | 0.36 | 4.9 |
| 3 | quinaldine | 0.1 | 4.9 | 1.2 | 0.36 | 4.7 |
| 4 | 2,3,5,6-tetramethylpyrazine | 0.05 | 5.2 | 1.4 | 0.35 | 4.6 |
| 5 | 2-picoline | 0.1 | 4.8 | 1.9 | 0.36 | 5.4 |
| 6 | 2,3-dimethylquinoxaline | 0.05 | 5.2 | 1.7 | 0.38 | 5.1 |
| 7 | 2,4-dimethylquinoline | 0.05 | 5.0 | 1.5 | 0.37 | 5.2 |
| 8 | di-t-butylpyridine | 0.05 | 5.1 | 1.4 | 0.36 | 4.5 |
| 9 | phenazine | 0.1 | 4.7 | 1.8 | 0.36 | 5.4 |
| 10 | acridine | 0.1 | 4.9 | 1.7 | 0.37 | 5.2 |
| CE*1 | - | - | 4.4 | 3.4 | 0.36 | 6.8 |
| CE*2 | - | - | 3.4 | 0.8 | 0.30 | 7.0 |
| CE*3 | - | - | 4.1 | 1.8 | 0.33 | 6.7 |
| CE*4 | - | | 4.2 | 2.2 | 0.34 | 6.4 |

| | | | | | | |
|---|---|---|---|---|---|---|
| *CE: comparative example. | | | | | | |

As shown above, by way of the method for producing homo- and co-polymers of ethylene according to the present invention, it is possible to obtain homo- and co-polymers of ethylene, which have high bulk density and narrow molecular weight distribution, with high polymerization activity.

## Claims

1. A method for producing homo- and co-polymers of ethylene, which comprises carrying out polymerization in the presence of :
(a) a solid titanium catalyst produced by means of:
(i) preparing a magnesium compound solution by contact-reacting a halogenated magnesium compound with alcohol;
(ii) reacting thereto an ester compound having at least one hydroxyl group and a silicon compound having at least one alkoxy group; and
(iii) reacting thereto a titanium compound and a silicon compound; and
(b) organometallic compounds of Group II or III of the Periodic Table;
(c) a cyclic nitrogen compound.

2. The method for producing homo- and co-polymers of ethylene according to Claim 1, wherein said ester compound having at least one hydroxyl group is an unsaturated aliphatic acid ester having at least one hydroxyl group, which is selected from the group consisting of 2-hydroxy ethylacrylate, 2-hydroxy ethylmethacrylate, 2-hydroxy propyl acrylate, 2-hydroxy propylmethacrylate, 4-hydroxy butylacrylate, and pentaerythritol tri-acrylate; an aliphatic monoester or polyester containing at least one hydroxyl group, which is selected from the group consisting of 2-hydroxy ethyl acetate, methyl 3-hydroxy butylate, ethyl 3-hydroxy butylate, methyl 2-hydroxy isobutylate, ethyl 2-hydroxy isobutylate, methyl-3-hydroxy-2-methyl propionate, 2,2-dimethyl-3-hydroxy propionate, ethyl-6-hydroxy hexanoate, t-butyl-2-hydroxy isobutylate, diethyl-3-hydroxy glutarate, ethyllactate, isopropyl lactate, butyl isobutyl lactate, isobutyl lactate, ethyl mandelate, dimethyl ethyl tartrate, ethyl tarrtate, dibutyl tartrate, diethyl citrate, triethyl citrate, ethyl-2-hydroxy-caproate, and diethyl *bis*-(hydroxymethyl) malonate; an aromatic ester having at least one hydroxyl group, which is selected from the group consisting of 2-hydroxy ethyl benzoate, 2-hydroxy ethyl salicylate, methyl-4-(hydroxy methyl) benzoate, methyl-4-hydroxy benzoate, ethyl-3-hydroxy benzoate, 4-methyl salicylate, ethyl salicylate, phenyl salicylate, propyl-4-hydroxy benzoate, phenyl 3-hydroxy naphthanoate, monoethylene glycol monobenzoate, diethylene glycol monobenzoate, and triethylene glycol monobenzoate; or an alicyclic ester having at least one hydroxyl group such as hydroxy butyl- lactone; and wherein said silicon compound having at least one alkoxy group is represented by a general formula of RₙSi(OR)₄₋ₙ, where R stands for a hydrocarbon having 1~12 carbons; and n for an integer of 0 ~ 3, which is selected from the group consisting of dimethyldimethoxysilane, dimethyldiethoxysilane, diphenyldimethoxysilane, methylphenyldimethoxysilane, diphenyldiethoxysilane, ethyltrimethoxysilane, vinyltrimethoxysilane, methyltrimethoxysilane, phenyltrimethoxysilane, methyltriethoxysilane, ethyltriethoxysilane, vinyltriethoxysilane, butyltriethoxysilane, phenyltriethoxysilane, ethyltriisopropoxysilane, vinyltributoxysilane, ethylsilicate, butylsilicate, and methyltriaryloxysilane.

3. The method for producing homo- and co-polymers of ethylene according to Claim 1, wherein said titanium compound is represented by a general formula of Ti(OR)ₐX₄₋ₐ where R stands for a hydrocarbon group, X for a halogen atom, and a for a natural number of 0 ~ 4; and wherein said silicon compound is represented by a general formula of RₙSiCl₄₋ₙ, where R stands for hydrogen; an alkyl, alkoxy, haloalkyl, or aryl group having 1~10 carbons; or a halosilyl or halosilylalkyl group having 1-8 carbons; and n for a natural number of 0 ~ 3.

4. The method for producing homo- and co-polymers of ethylene according to Claim 3, wherein said titanium compound is a 4-halogenated titanium, which is selected from the group consisting of TiCl₄, TiBr₄, and TiI₄; a 3-halogenated alkoxytitanium, which is selected from the group consisting of Ti(OCH₃)Cl₃, Ti(OC₂H₅)Cl₃, Ti(OC₂H₅)Br₃, and Ti(O(i-C₄H₉))Br₃; a 2-halogenated alkoxytitanium, which is selected from the group consisting of Ti(OCH₃)₂Cl₂, Ti(OC₂H₅)₂Cl₂, Ti(O(i-C₄H₉))₂Cl₂, and Ti(OC₂H₅)₂Br₂; and a tetralkoxytitanium, which is selected from the group consisting of Ti(OCH₃)₄, Ti(OC₂H₅)₄, and Ti(OC₄H₉)₄; and wherein said silicon compound is silicon tetrachloride, a trichlorosilane, which is selected from the group consisting of methyltrichlorosilane, ethyltrichlorosilane, and phenyltrichlorosilane; a dichlorosilane, which is selected from the group consisting of dimethyldichlorosilane, diethyldichlorosilane, diphenyldichlorosilane, and methylphenyldichlorosilane; or a monochlorosilane such as trimethylchlorosilane.

5. The method for producing homo- and co-polymers of ethylene according to Claim 3, wherein said titanium compound is titanium tetrachloride, and said silicon compound is silicon tetrachloride.

6. The method for producing homo- and co-polymers of ethylene according to Claim 1, wherein said solid titanium catalyst is produced by further reacting the product of step(a)(iii) with a titanium compound.

7. The method for producing homo- and co-polymers of ethylene according to Claim 1, wherein said cyclic nitrogen compound is 2,6-lutidine, 2,3-dimethylquinoxaline, quinaldine, 2,4,6-collidine, 2,4-dimethylquinoline, 2-picoline, 2,3,5,6-tetramethylpyrazine, phenazine, acridine, di-t-butylpyridine, or the mixture thereof.

## Patentansprüche

1. Verfahren zum Herstellen von Homo- und Copolymeren von Ethylen, umfassend das Durchführen einer Polymerisation in Gegenwart von:
(a) einem festen Titankatalysator, der hergestellt ist durch:
(1) Herstellen einer Magnesiumverbindungs-Lösung durch Kontakt-Umsetzen einer halogenierten Magnesiumverbindung mit Alkohol;
(2) Umsetzen davon mit einer Esterverbindung, die wenigstens eine Hydroxygruppe aufweist, und einer Siliciumverbindung, die wenigstens einen Alkyoxyrest aufweist; und
(3) Umsetzen davon mit einer Titanverbindung und einer Siliciumverbindung; und
(b) organometallischen Verbindungen der Gruppe II oder III des periodischen Systems der Elemente;
(c) einer cyclischen Stickstoffverbindung.

2. Verfahren zum Herstellen von Homo- und Copolymeren von Ethylen nach Anspruch 1, wobei die Esterverbindung, die wenigstens eine Hydroxygruppe aufweist, ein ungesättigter aliphatischer Ester mit wenigstens einer Hydroxygruppe, ausgewählt aus der Gruppe, bestehend aus 2-Hydroxyethylacrylat, 2-Hydroxyethylmethacrylat, 2-Hydroxypropylacrylat, 2-Hydroxypropylmethacrylat, 4-Hydroxybutylacrylat und Pentaerythritoltriacrylat; ein aliphatischer Monoester oder Polyester mit wenigstens einer Hydroxygruppe, ausgewählt aus der Gruppe, bestehend aus 2-Hydroxyethylacetat, Methyl-3-hydroxybutylat, Ethyl-3-hydroxybutylat, Methyl-2-hydroxyisobutylat, Ethyl-2-hydroxyisobutylat, Methyl-3-hydroxy-2-methylpropionat, 2,2-Dimethyl-3-hydroxypropionat, Ethyl-6-hydroxyhexanoat, *tert*-Butyl-2-hydroxyisobutylat, Diethyl-3-hydroxyglutarat, Ethyllactat, Isopropyllactat, Butylisobutyllactat, Isobutyllactat, Ethylmandelat, Dimethylethyltartrat, Ethyltartrat, Dibutyltartrat, Diethylcitrat, Triethylcitrat, Ethyl-2-hydroxycaproat und Diethyl-bis(hydroxymethyl)malonat; ein aromatischer Ester mit wenigstens einer Hydroxygruppe, ausgewählt aus der Gruppe, bestehend aus 2-Hydroxyethylbenzoat, 2-Hydroxyethylsalicylat, Methyl-4-(hydroxymethyl)benzoat, Methyl-4-hydroxybenzoat, Ethyl-3-hydroxybenzoat, 4-Methylsalicylat, Ethylsalicylat, Phenylsalicylat, Propyl-4-hydroxybenzoat, Phenyl-3-hydroxynaphthanoat, Monoethylenglycolmonobenzoat, Diethylenglycolmonobenzoat und Triethylenglycolmonobenzoat; oder ein alicyclischer Ester mit wenigstens einer Hydroxygruppe, wie z. B. Hydroxybutyllacton, ist; und wobei die Siliciumverbindung, die wenigstens einen Alkoxyrest aufweist, von der allgemeine Formel RₙSi(OR)₄₋ₙ dargestellt wird, wobei R für einen Kohlenwasserstoff mit 1 bis 12 Kohlenstoffatomen steht; und n für eine ganze Zahl von 0 bis 3 steht, und aus der Gruppe, bestehend aus Dimethyldimethoxysilan, Dimethyldiethoxysilan, Diphenyldimethoxysilan, Methylphenyldimethoxysilan, Diphenyldiethoxysilan, Ethyltrimethoxysilan, Vinyltrimethoxysilan, Methyltrimethoxysilan, Phenyltrimethoxysilan, Methyltriethoxysilan, Ethyltriethoxysilan, Vinyltriethoxysilan, Butyltriethoxysilan, Phenyltriethoxysilan, Ethyltrüsopropoxysilan, Vinyltributoxysilan, Ethylsilicat, Butylsilicat und Methyltriaryloxysilan ausgewählt ist.

3. Verfahren zum Herstellen von Homo- und Copolymeren von Ethylen nach Anspruch 1, wobei die Titanverbindung von der allgemeinen Formel Ti(OR)ₐX₄₋ₐ dargestellt wird, wobei R für einen Kohlenwasserstoffrest steht, X für ein Halogenatom steht, und a für eine natürliche Zahl von 0 bis 4 steht; und wobei die Siliciumverbindung von der allgemeinen Formel RₙSiCl₄₋ₙ dargestellt wird, wobei R für Wasserstoff; einen Alkyl-, Alkoxy-, Halogenalkyl- oder Arylrest mit 1 bis 10 Kohlenstoffatomen; oder einen Halogensilyl- oder Halogensilylalkylrest mit 1 bis 8 Kohlenstoffatomen steht; und n für eine natürliche Zahl von 0 bis 3 steht.

4. Verfahren zum Herstellen von Homo- und Copolymeren von Ethylen nach Anspruch 3, wobei die Titanverbindung ein 4-halogeniertes Titan, ausgewählt aus der Gruppe, bestehend aus TiCl₄, TiBr₄ und Til₄; ein 3-halogeniertes Alkoxytitan, ausgewählt aus der Gruppe, bestehend aus Ti(OCH₃)Cl₃, Ti(OC₂H₅)Cl₃, Ti(OC₂H₅)Br₃ und Ti(O(i-C₄H₉))Br₃; ein 2-halogeniertes Alkoxytitan, ausgewählt aus der Gruppe, bestehend aus Ti(OCH₃)₂Cl₂, Ti(OC₂H₅)₂Cl₂, Ti(O(i-C₄H₉))₂Cl₂ und Ti(OC₂H₅)₂Br₂; oder ein Tetraalkoxytitan, ausgewählt aus der Gruppe, bestehend aus Ti(OCH₃)₄, Ti(OC₂H₅)₄ und Ti(OC₄H₉)₄, ist; und wobei die Siliciumverbindung Siliciumtetrachlorid; ein Trichlorsilan, ausgewählt aus der Gruppe, bestehend aus Methyltrichlorsilan, Ethyltrichlorsilan und Phenyltrichlorsilan; ein Dichlorsilan, ausgewählt aus der Gruppe, bestehend aus Dimethyldichlorsilan, Diethyldichlorsilan, Diphenyldichlorsilan und Methylphenyldichlorsilan; oder ein Monochlorsilan, wie z. B. Trimethylchlorsilan, ist.

5. Verfahren zum Herstellen von Homo- und Copolymeren von Ethylen nach Anspruch 3, wobei die Titanverbindung Titantetrachlorid ist und die Siliciumverbindung Siliciumtetrachlorid ist.

6. Verfahren zum Herstellen von Homo- und Copolymeren von Ethylen nach Anspruch 1, wobei der feste Titankatalysator durch weiteres Umsetzen des Produkts von Schritt (a)(iii) mit einer Titanverbindung hergestellt ist.

7. Verfahren zum Herstellen von Homo- und Copolymeren von Ethylen nach Anspruch 1, wobei die cyclische Stickstoffverbindung 2,6-Lutidin, 2,3-Dimethylchinoxalin, Chinaldin, 2,4,6-Collidin, 2,4-Dimethylchinolin, 2-Picolin, 2,3,5,6-Tetramethylpyrazin, Phenazin, Acridin, Di-*tert*-butylpyridin oder deren Gemisch ist.

## Revendications

1. Procédé de production d'homo- et co-polymères d'éthylène, qui comprend la réalisation d'une polymérisation en présence de:
(a) un catalyseur de titane solide produit au moyen de:
(i) une préparation d'une solution de composé de magnésium par réaction de contact d'un composé de magnésium halogéné avec un alcool;
(ii) une réaction de celle-ci avec un composé ester ayant au moins un groupe hydroxyle et un composé dé silicium ayant au moins un groupe alcoxy; et
(iii) une réaction de ceux-ci avec un composé de titane et d'un composé de silicium; et
(b) des composés organométalliques du groupe II ou III du Tableau Périodique;
(c) un composé azoté cyclique.

2. Procédé de production d'homo- et co-polymères d'éthylène selon la revendication 1, dans lequel ledit composé ester ayant au moins un groupe hydroxyle est un ester d'acide aliphatique insaturé ayant au moins un groupe hydroxyle, qui est choisi dans le groupe constitué par l'acrylate de 2-hydroxyéthyle, le méthacrylate de 2-hydroxyéthyle, l'acrylate de 2-hydroxypropyle, le méthacrylate de 2-hydroxypropyle, l'acrylate de 4-hydroxybutyle et le triacrylate de pentaérythritol; un monoester ou polyester aliphatique contenant au moins un groupe hydroxyle, qui est choisi dans le groupe constitué par l'acétate de 2-hydroxyéthyle, le 3-hydroxybutylate de méthyle, le 3-hydroxybutylate d'éthyle, le 2-hydroxyisobutylate de méthyle, le 2-hydroxyisobutylate d'éthyle, le propionate de méthyl-3-hydroxy-2-méthyle, le 3-hydroxypropionate de 2,2-diméthyle, le 6-hydroxyhexanoate d'éthyle, le 2-hydroxyisobutylate de t-butyle, le 3-hydroxyglutarate de diéthyle, le lactate d'éthyle, le lactate d'isopropyle, le lactate de butylisobutyle, le lactate d'isobutyle, le mandélate d'éthyle, le tartrate de diméthyléthyle, le tartrate d'éthyle, le tartrate de dibutyle, le citrate de diéthyle, le citrate de triéthyle, le 2-hydroxycaproate d'éthyle et le malonate de diéthyl-bis-(hydroxyméthyle); un ester aromatique ayant au moins un groupe hydroxyle, qui est choisi dans le groupe constitué par le benzoate de 2-hydroxyéthyle, le salicylate de 2-hydroxyéthyle, le 4-hydroxyméthyle benzoate de méthyle, le 4-hydroxybenzoate de méthyle, le 3-hydroxybenzoate d'éthyle, le salicylate de 4-méthyle, le salicylate d'éthyle, le salicylate de phényle, le 4-hydroxybenzoate de propyle, le 3-hydroxynapthanoate de phényle, le monobenzoate de monoéthylène glycol, le monobenzoate de diéthylène glycol et le monobenzoate de triéthylène glycol; ou un ester alicyclique ayant au moins un groupe hydroxyle tels que l'hydroxybutyl lactone; et dans lequel ledit composé de silicium ayant au moins un groupe alcoxy est représenté par la formule générale RₙSi(OR)₄₋ₙ, où R représente un hydrocarbure ayant 1 - 12 atomes de carbone; et n un nombre entier de 0 - 3, qui est choisi dans le groupe constitué par le diméthyldiméthoxysilane, le diméthyldiéthoxysilane, le diphényldiméthosysilane, le méthylphénylméthoxysilane, le diphényldiéthoxysilane, l'éthyltriméthoxysilane, le vinyltriméthoxysilane, le méthyltriméthoxysilane, le phényltriméthoxysilane, le méthyltriéthoxysilane, l'éthyltriéthoxysilane, le vinyltriéthoxysilane, le butyltriéthoxysilane, le phényltriéthoxysilane, l'éthyltriisopropoxysilane, le vinyltributoxysilane, le silicate d'éthyle, le silicate de butyle et un méthyltriaryloxysilane.

3. Procédé de production d'homo- et co-polymères d'éthylène selon la revendication 1, dans lequel ledit composé de titane est représenté par la formule générale Ti(OR)ₐX₄₋ₐ, où R représente un groupe hydrocarboné, X un atome d'halogène et a un nombre naturel de 0 ~ 4; et dans lequel ledit composé de silicium est représenté par la formule générale RₙSiCl₄₋ₙ, où R représente un atome d'hydrogène; un groupe alkyle, alcoxy, halogénoalkyle ou aryle ayant 1 ~ 10 atomes de carbone; ou un groupe halogénosilyle ou halogénosilylalkyle ayant 1 ~ 8 atomes de carbone; et n un nombre naturel de 0 ~ 3.

4. Procédé de production d'homo- et co-polymères d'éthylène selon la revendication 3, dans lequel ledit composé de titane est un titane 4-halogéné, qui est choisi dans le groupe constitué par TiCl₄, TiBr₄ et TiI₄; un alcoxy titane 3-halogéné qui est choisi dans le groupe constitué par Ti (OCH₃) Cl₃, Ti (OC₂H₅) Cl₃, Ti(OC₂H₅)Br₃ et Ti (O (i-C₄H₉)) Br₃; un alcoxy titane 2-halogéné, qui est choisi dans le groupe constitué par Ti (OCH₃)₂Cl₂, Ti (OC₂H₅)2Cl₂, Ti(O(i-C₄H₉))₂Cl₂ et Ti(OC₂H₅)₂Br₂; et un tétraalcoxy titane qui est choisi dans le groupe constitué par Ti(OCH₃)₄, Ti(OC₂H₅)₄ et Ti (OC₄H₉)₄; et dans lequel ledit composé de silicium est le tétrachlorure de silicium, un trichlosilane, qui est choisi dans le groupe constitué par le méthyltrichlorosilane, l'éthyltrichlorosilane et le phényltrichlorosilane; un dichlorosilane, qui est choisi dans le groupe constitué par le diméthyldichlorosilane, le diéthyldichlorosilane, le diphényldichlorosilane et le méthylphényldichlorosilane; ou un monochlorosilane tel que le triméthylchlorosilane.

5. Procédé de production d'homo- et co-polymères d'éthylène selon la revendication 3, dans lequel ledit composé de titane est du tétrachlorure de titane, et ledit composé de silicium est du tétrachlorure de silicium.

6. Procédé de production d'homo- et co-polymères d'éthylène selon la revendication 1, dans lequel ledit catalyseur de titane solide est produit en faisant réagir en outre le produit de l'étape (a)(iii) avec un composé de titane.

7. Procédé de production d'homo- et co-polymères d'éthylène selon la revendication 1, dans lequel ledit composé azoté cyclique est la 2,6-lutidine, la 2,3-dimthylquinoxaline, la quinaldine, la 2,4,6-collidine, la 2,4-dimthylquinoléine, la 2-picoline, la 2,3,5,6-tétraméthylpyrazine, la phénazine, l'acridine, la di-t-butylpyridine et les mélanges de celles-ci.
